# EUROPEAN PATENT APPLICATION

(11) **EP 2 068 454 A1**
(43) Date of publication of application: **10.06.2009**
(21) Application number: 07291446.8
(22) Date of filing: 03.12.2007
(51) Int. Cl.: H04B 3/46

(54) **A module and device for crosstalk channel estimation**

(71) Applicant: Alcatel Lucent, 75008 Paris (FR)
(72) Inventor: Maes, Jochen, 2431 Veerle (BE); Peeters, Michael, 1742 Temat (BE); Guenach, Mamoun, 1830 Machelen (BE)
(74) Representative: Plas, Axel Ivo Michel

(57) **Abstract**

The present invention relates to a crosstalk channel estimation module (209) and may be used in communication equipment (201). The module (209) comprises means for tracking changes (205) in transmission of data on a direct channel (111; 121) and means for determining a correlation (208) between the direct channel (111; 121) and at least one crosstalk channel (112; 122). The module (209) further comprises means for estimating the crosstalk channel (206) or changes in the crosstalk channel based on the tracked changes and the correlation.

## Description

### Field of the Invention

The present invention generally relates to crosstalk channel estimation in communication networks such as communication networks based on Digital Subscriber Line (xDSL) technology.

### Background of the Invention

High-speed or broadband communication systems such as Digital Subscriber Line (xDSL) based communication networks are affected by various effects that reduce their service level. A typical example of such effects is noise, which reduces the available bit rate on a communication line. In addition to reducing the service level of a communication line, noise may also introduce errors in the communication on a line. A more specific example of noise effects is crosstalk. Crosstalk is the effect where data transmission on one line induces noise on other, nearby communication lines. These lines can be nearby at termination points, for instance at an Access Multiplexer or switch, or can be transmission lines located in the same cable binder or cable tray.

Typically, the pathway over which crosstalk between communication lines transfers is referred to as the crosstalk channel. It is to be understood that the crosstalk channel relates to the traffic or noise induced by one communication line on another communication line. When transport of information occurs intentionally over a communication line or the communication line is intentionally designed to transport information, this communication line is called a direct channel. Thus, in a two line situation, each of the two communication lines is a direct channel and due to the crosstalk channels, noise is induced by each communication line on the other communication line.

A well-known solution for crosstalk is crosstalk compensation on communication lines. Crosstalk compensation can for instance be achieved by adapting the data rate on a communication line based on the presence of crosstalk. However, crosstalk compensation requires information about the crosstalk channel before it can be compensated. Such crosstalk channel information is typically obtained through extensive measurements on communication lines. For instance a Signal to Noise Ratio measurement or measurements based on the use of perturbation signals provide valuable information about the presence of the crosstalk channel and the amplitude and/or phase of the crosstalk. However, there are problems with extensive measurements to determine the crosstalk channel.

A communication line is typically located between two termination points, for instance an xDSL line between a Digital Subscriber Line Access Multiplexer (DSLAM), for instance at a Central Office (CO) and Customer Premises Equipment (CPE) such as a set-top box or xDSL modem. The communication line then has an upstream and a downstream direction of traffic. To obtain an accurate estimation of the crosstalk channel, each side performs measurements and one side then has to report the information back to the other. For instance, both the CO equipment (for instance the DSLAM at the CO or a line termination card therein) and the CPE perform measurements and the CPE reports its results back to the CO. The problem with this is that both the CPE and the CO equipment need to perform frequent measurements to track the crosstalk channel and keep the information up to date. This way, the crosstalk compensation operates based on accurate information and thus the crosstalk is compensated more accurately. These measurements take time and providing feedback from the CPE to the CO requires additional bandwidth on the communication line between the CPE and the CO. In the case of xDSL, the Embedded Operations Channel (EOC), which is used to communicate between the CPE and the CO for line configuration may thus be filled with measurement reports.

However, even before the above described crosstalk channel tracking can be performed, the communication line has to be initialized. During initialization the CPE and CO equipment establish the operation parameters of the communication line using the EOC. One aspect of line initialization is configuration of the crosstalk compensation system. This requires an initial estimate of the crosstalk channel, which may delay the initialization of the communication line if no crude crosstalk channel estimates are available.

In summary, the use of frequent crosstalk channel measurements before or during initialization and show-time delay the availability of the communication line in time (e.g. slow line start-up) and capacity (e.g. frequent communication on the EOC channel).

It is an object of the present invention to provide a crosstalk channel estimation system that reduces the amount of feedback information on a communication line. It is another objective of the present invention to reduce the initialization time of a communication line.

### Summary of the Invention

The objectives of the present invention are realized and the shortcomings of the measurement based prior art crosstalk channel estimation systems are overcome by a crosstalk channel estimation module for use in communication equipment comprising means for tracking changes in a direct channel, means for determining a correlation between the direct channel and at least one crosstalk channel and means for estimating the crosstalk channel or changes in the crosstalk channel based on the tracked changes and the correlation.

Indeed, by tracking changes in at least one direct channel for instance the direct channel on the communication line subject to the one or more crosstalk channels and monitoring the correlation between at least one direct channel and one or more crosstalk channels, the module according to the present invention is able to estimate the one or more crosstalk channels. Since no or fewer measurements such as Signal to Noise Ratio (SNR) measurements have to be communicated, delays at initialization and/or bandwidth occupancy at show-time are substantially reduced in comparison with the prior art.

Tracking the direct channel during show-time is a standard function of pieces of CPE equipment such as xDSL or cable modems, set-top boxes (STB) or CO equipment such as DSLAM line termination cards. For instance, frequency-domain equalizer (FEQ) updating, and parameters such as the channel characteristics Hlog, Hlin, the signal-to-noise ratio, bit-loading etc. provide information on the direct channel and changes therein. This means that the changes in the direct channel can be obtained using these functions without any additional effort. Thus existing hardware requires little modifications to support the present invention. The direct channel changes can be monitored either in the downstream or upstream direction. In addition to tracking changes in the direct channel, the crosstalk channel estimation module according to the present invention also monitors the correlation between the direct channel and the crosstalk channels.

The correlation between the direct channel and a crosstalk channel is a measure for the manner wherein changes in one channel (the direct channel) are reflected in the other channel (the crosstalk channel). A typical suitable instant for monitoring the correlation between the crosstalk channel and the direct channel takes place when changes occur in ambient parameters. Such changes are reflected in the direct channel and the crosstalk channel. When later on changes are detected in the direct channel, the corresponding changes in the crosstalk channel can be estimated using the earlier retrieved correlation information.

The estimation done by the module can handle relative variations in the direct and crosstalk channel that are small compared to the channel strength. However, it may not be able to estimate large or sudden changes in the crosstalk channel. Therefore the present invention may be used in combination with occasional measurements based on SNR or perturbation signals. For instance, a measurement may be performed at regular time intervals and in between the measurements the module according to the present invention can be used to estimate the crosstalk channel and the changes therein. This reduces the amount of measurements needed and thus also the number of communications between the termination points of the communication line. In addition, during line start-up, earlier retrieved correlation information may be used to obtain an initial estimate of the crosstalk channel, which allows for a faster line initialization.

Optionally, the crosstalk channels are represented by a crosstalk precoding or cancellation matrix.

The crosstalk channel characteristics can be used to determine a crosstalk precompensation or cancellation matrix. It is to be understood that the elements in such a precompensation or cancellation matrix may be mapped onto crosstalk channels and vice versa. Essentially, estimating the crosstalk channels is equivalent to estimating the matrix elements. The elements in a precompensation or cancellation matrix are used in well-known crosstalk compensation mechanisms to reduce the effect of crosstalk on communication lines. It may therefore be beneficial to use the module according to the present invention to update such a matrix.

Optionally, the crosstalk channel estimation module further comprises means for storing the correlation information.

By storing the correlation information, a historical overview can be obtained. Such a historical overview can be beneficial as it may provide additional information or statistical information about the changes in amplitude and/or phase of the crosstalk channel based on the changes in the direct channel.

The information may be stored in the module itself on for instance an integrated memory or an external memory module in the communication equipment. Alternatively, the correlation information may be stored in an external device such as a network analyzer or a central database. This enables the communication equipment to share its information with other equipment. For instance, each line termination board in a DSLAM may store its information in a network analyzer. This way, each termination board in the DSLAM is able to take into account more information than what it can determine on its own. This can be beneficial as various line termination boards can be placed close to each other and thus the communication lines thereto may experience similar changes in the direct channel and crosstalk channel.

Optionally, the changes are increasing or decreasing signal strength and/or phase.

Changes in environmental parameters such as temperature, humidity, pressure, oxidation, strain, stress, etc are reflected both in the direct channel and the crosstalk channel. For instance, if the ambient temperature rises, the signal strength on the direct channel may decrease and the crosstalk channel will change accordingly. Similarly, if the ambient temperature is lowered, the signal strength may increase and the crosstalk channel will change accordingly.

Such changes in signal strength can be tracked by various pieces of communication equipment, and may include FEQ, SNR, Hlin, Hlog,... etc. Therefore it may be beneficial to use such changes in order to estimate the crosstalk channel. Such changes may provide sufficient information to estimate the crosstalk channel or may be combined with other information such as a historical overview of the correlation to obtain an accurate estimate of the crosstalk channel.

Optionally the communication equipment is Digital Subscriber Line equipment.

Optionally the direct channel is not disturbed by the crosstalk channel.

The correlation information could include information relating to the correlation between a direct channel and crosstalk channels whereby the direct channel is not disturbed by the crosstalk channels. For instance, in a situation where a communication line is starting up, the initial crosstalk estimation for that communication line may be obtained based on a correlation between these estimated crosstalk channels and other direct channels which belong to other, already active communication lines. These channels may be correlated because they are located in the vicinity of each other.

The advantage of this is that there is no need for crosstalk measurements before the initialization of a communication line and thus the initialization time is reduced.

The present invention further relates to a method for estimating at least one crosstalk channel for use in communication equipment comprising the steps of tracking changes in transmission of data on a direct channel, determining a correlation between the direct channel and the crosstalk channel and estimating the crosstalk channel based on the tracked changes and the correlation.

### Brief Description of the Drawings

Fig. 1 illustrates the direct channel and the crosstalk channel in a two communication line scenario; and
Fig. 2 is a functional block scheme of an embodiment of the crosstalk estimation module according to the present invention.

### Detailed Description of Embodiment(s)

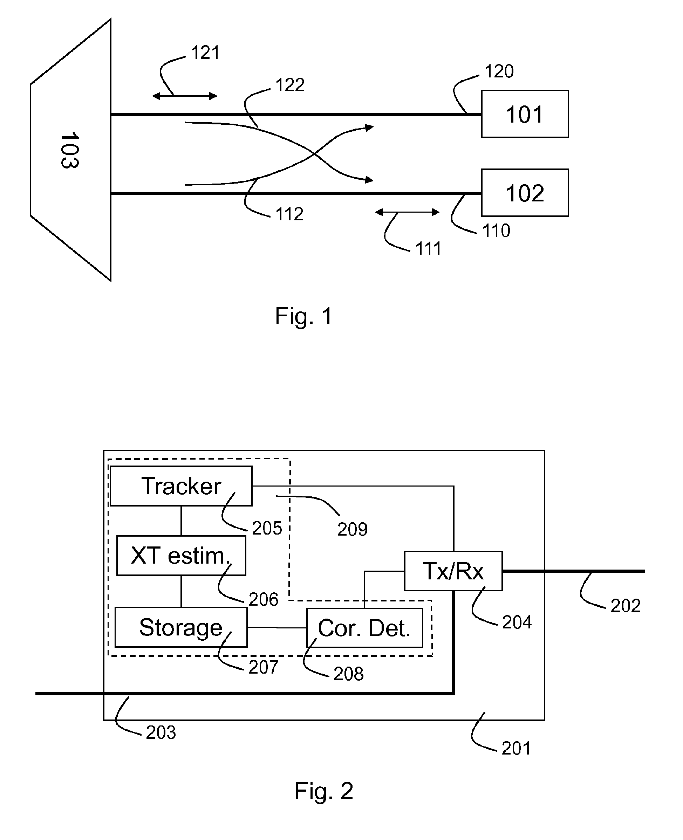

In Fig. 1 two communication lines 110 and 120 are shown. Each of the communication lines 110 and 120 may connect an xDSL modem, 101 and 102 respectively, with DSLAM 103. Each of these communication lines is subject to environmental parameters such as the ambient temperature and the humidity. The upstream traffic from the xDSL modems 101 and 102 to the DSLAM 103 and the downstream traffic from the DSLAM 103 to the xDSL modems 101 and 102 are both part of the direct channel 111 for communication line 110 and direct channel 121 for communication line 120. Furthermore, each communication line 110 and 120 induces crosstalk 112 and 122 respectively on the other communication line and only far-end crosstalk in the downstream direction is depicted.

In case the environmental parameters change, the direct channels 111 and 121 will change accordingly. The changes in the respective crosstalk channels 112 and 122 are related to those in the direct channels 111 and 121. For instance, if the temperature rises, the xDSL modems 101 and 102 and the DSLAM 103 may notice a decreasing or an increasing signal strength on the signals in the downstream and upstream directions respectively due to the tracking of the direct channel 111 and 121. Based on the correlation between the direct channel 111 and the crosstalk channel 112 and between direct channel 121 and crosstalk channel 122, the DSLAM 103 is able to determine that crosstalk channels 112 and 122 will change in relation to the changes noticed in their respective direct channels 111 and 121. Of course, the DSLAM may be able to consider the changes in both direct channels and the correlation with both crosstalk channels to determine both crosstalk channels. To determine the amplitude and/or phase of the changed crosstalk channels 112 and 122, the DSLAM 103 may use additional information stored in the DSLAM 103 or in another network element such as a network analyzer or a central database. Such additional information may for instance be a historical overview of the correlation between the crosstalk channel and the direct channel. Such historical overview provides the information needed to determine how much the amplitude or phase of the crosstalk channel has changed based on the change in amplitude or phase of the direct channel.

Fig. 2 shows a piece of communication equipment 201 wherein a transmitter and receiver pair (Tx/Rx) 204 and a crosstalk channel estimation module 209 are located. The crosstalk channel estimation module 209 contains a module for tracking the direct channel (Tracker) 205, a crosstalk estimation module (XT estim.) 206 a storage module 207, and correlation determination module 208 are located. The Tx/Rx 204 is connected to a communication line 202 such as an xDSL subscriber line and to an external device through interface 203. For instance, the communication equipment 201 may be a line termination board in a DSLAM that is connected to an uplink through interface 203.

The Tx/Rx 204 performs traditional operations such as encoding/decoding of data before it is transmitted over communication line 202, error correction, buffering of data packets, etc. In addition, the Tx/Rx 204 is used by the tracker to monitor the information transported on the communication line 202 and the changes in the signals transported over the communication line 202. Crosstalk estimation module 206 can in turn use the information provided by the tracker 205 and the information stored in storage 207 to estimate how the crosstalk channel changes compared to the direct channel. The information in storage 207 can be obtained from correlation determination module 208, which is connected to the storage 207 and the Tx/Rx 204. The correlation determination module 208 is able to determine the correlation between the direct channel and one or more crosstalk channels and optionally the correlation between these channels and environmental parameters such as ambient temperature or the humidity at the CO.

In an alternative embodiment, storage 207 may be located external to the communication equipment 201. For instance, the crosstalk channel estimator 206 may communicate to an external device to obtain the information such as a historical overview of the correlation. In such case, the correlation estimation module 208 may be connected directly to the crosstalk channel estimation module 207 or the correlation estimation module 208 may communicate with external network equipment or storage.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned.

## Claims

1. A crosstalk channel estimation module (209) for use in communication equipment (201) comprising means for tracking changes (205) in at least one direct channel (111; 121),
**characterized in that** said module (209) further comprises means for determining a correlation (208) between said direct channel (111; 121) and at least one crosstalk channel (112; 122) and means for estimating (206) said crosstalk channel (112: 122) or changes in said crosstalk channel (112; 122) based on said tracked changes and said correlation.

2. The crosstalk channel estimation module (209) according to claim 1,
**characterized in that** said crosstalk channels (112; 122) are represented by a crosstalk precoding or cancellation matrix.

3. The crosstalk channel estimation module (209) according to claim 1,
**characterized in that** said module (209) further comprises means for storing (207) correlation information.

4. The crosstalk channel estimation module (209) according to claim 1,
**characterized in that** said changes are increasing or decreasing signal strength or phase.

5. The crosstalk channel estimation module (209) according to claim 1,
**characterized in that** said communication equipment (201) is Digital Subscriber Line equipment.

6. The crosstalk channel estimation module (209) according to claim 1,
**characterized in that** said direct channel (111; 121) is not disturbed by said crosstalk channel (112; 122).

7. A method for estimating at least one crosstalk channel (112; 122) for use in communication equipment comprising the step of tracking changes in at least one direct channel,
**characterized in that** said method further comprises the step of determining a correlation between said direct channel (111; 121) and said crosstalk channel (112; 122) and the step of estimating said crosstalk channel (112; 122) or changes in said crosstalk channel (112; 122) based on said tracked changes and said correlation
